# EUROPÄISCHE PATENTANMELDUNG

(11) **EP 3 222 836 A1**
(43) Veröffentlichungstag der Anmeldung: **27.09.2017**
(21) Anmeldenummer: 17159501.0
(22) Anmeldetag: 07.03.2017
(51) Int. Cl.: F02B 75/04, F16C 7/06

(54) **PLEUEL FÜR EINE BRENNKRAFTMASCHINE MIT VARIABLER VERDICHTUNG MIT EINER EXZENTER-VERSTELLEINRICHTUNG**

(30) Priorität: 16.03.2016 DE 102016104814; 22.09.2016 DE 102016117875
(71) Anmelder: ECO Holding 1 GmbH, DE-97828 Marktheidenfeld (DE)
(72) Erfinder: Jung, Christian, 15890 Eisenhüttenstadt (DE); Mudra, Alexander, 02826 Görlitz (DE); Schulze, Dietmar, 35516 Münzenberg (DE)

(57) **Zusammenfassung**

Die Erfindung betrifft ein Pleuel (1) für eine Brennkraftmaschine mit variabler Verdichtung mit einer Exzenter-Verstelleinrichtung (2) zur Verstellung einer effektiven Pleuelstangenlänge (50), umfassend einen Pleuelkörper (23) und einen daran angeordneten Pleueldeckel (24), wodurch ein Hublagerauge (20) eingeschlossen ist. Die Exzenter-Verstelleinrichtung (2) weist wenigstens einen, vorzugsweise zwei, Zylinder (12, 13) mit einem oder jeweils einem Kolben (6, 7) auf, der in einer Zylinderbohrung (10, 11) verschiebbar geführt und mit einer Stützstange (8, 9) verbunden ist. Ein Zulauf (14, 15) ist zum Zuführen von Hydraulikflüssigkeit in den oder die Zylinder (12, 13) sowie ein Ablauf (16, 17) zum Abführen von Hydraulikflüssigkeit von dem oder den Zylindern (12, 13) vorgesehen. Der Pleuelkörper (23) weist dabei zwei Nuten (27, 28) zur Verbindung der Zuläufe (14, 15) mit einem Hydraulikflüssigkeitskreislauf (80) auf, welche derart angeordnet sind, dass ein hochbelasteter Bereich des Hublagerauges (20) ausgespart ist

## Beschreibung

### Technisches Gebiet

Die Erfindung betrifft ein Pleuel für eine Brennkraftmaschine mit variabler Verdichtung mit einer Exzenter-Verstelleinrichtung zur Verstellung einer effektiven Pleuelstangenlänge.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulisch oder mechanisch betätigbaren Umschaltventilen eine Exzenter-Verstelleinrichtung eines Pleuels betätigen.

Die Anbindung des Pleuels an einer Kurbelwelle der Brennkraftmaschine erfolgt über ein Hublagerauge des Pleuels, wobei zwischen dem Hublagerauge und einem Kurbelwellenzapfen eine Lagerschale positioniert ist. Zwischen der Lagerschale und dem Kurbelwellenzapfen kann sich ein Schmierölfilm aufbauen.

### Offenbarung der Erfindung

Die Belastungen im Bereich des Hublagerauges und der Lagerschale sind ungleichmäßig, so dass sich in hochbelasteten Bereichen ein erhöhter Verschleiß ergibt. Daher ist es Aufgabe der Erfindung, ein dahingehend verbessertes Pleuel zu schaffen.

Die vorgenannte Aufgabe wird nach einem Aspekt der Erfindung gelöst mit den Merkmalen des unabhängigen Anspruchs.

Günstige Ausgestaltungen und Vorteile der Erfindung ergeben sich aus den weiteren Ansprüchen, der Beschreibung und der Zeichnung.

Es wird ein Pleuel für eine Brennkraftmaschine mit variabler Verdichtung mit einer Exzenter-Verstelleinrichtung zur Verstellung einer effektiven Pleuelstangenlänge vorgeschlagen, umfassend einen Pleuelkörper und einen daran angeordneten Pleueldeckel, wodurch ein Hublagerauge eingeschlossen ist. Die Exzenter-Verstelleinrichtung weist wenigstens einen, vorzugsweise zwei, Zylinder mit einem oder jeweils einem Kolben auf, der in einer Zylinderbohrung verschiebbar geführt und mit einer Stützstange verbunden ist. Dabei ist ein Zulauf zum Zuführen von Hydraulikflüssigkeit in den oder die Zylinder sowie ein Ablauf zum Abführen von Hydraulikflüssigkeit von dem oder den Zylindern vorgesehen.

Erfindungsgemäß weist der Pleuelkörper zwei Nuten zur Verbindung der Zuläufe mit einem Hydraulikflüssigkeitskreislauf auf, welche derart angeordnet sind, dass ein hochbelasteter Bereich des Hublagerauges ausgespart ist.

Üblicherweise führt ein Zulauf oder Ablauf von Hydraulikflüssigkeit zu den Zylindern, welche für die Betätigung der Exzenter-Verstelleinrichtung über Stützstangen vorgesehen sind, von einem dem Hublagerauge zugewandten unteren Ende der Zylinder weg, so dass die kürzeste Verbindung zur Versorgung der Zylinder mit Hydraulikflüssigkeit zu dem oberen Teil der Lagerschale des Hublagerauges im Bereich des Pleuelkörpers führt. Dieser Teil der Lagerschale ist jedoch durch die Gaskräfte der Brennkraftmaschine besonders hoch beansprucht. Erfindungsgemäß werden deshalb in dem Teil des Hublagerauges, welches im Pleuelkörpers angeordnet ist, zwei Nuten zur Versorgung der Zuläufe der Zylinder mit Hydraulikflüssigkeit angeordnet, welche beidseits des hochbeanspruchten Bereichs der Lagerschale um die Längsachse des Pleuels liegen, um die Lagerschale in diesem hochbeanspruchten Bereich durch den Pleuelkörper besser abzustützen. Die beiden Nuten verlaufen außerhalb der Längsachse des hochbelasteten Bereichs der Lagerschale von der Längsachse weg. So wird vorteilhaft vermieden, dass das Hublagerauge durch die Anordnung der Nuten im gerade hochbelasteten Bereich der Lagerschale zu wenig Material aufweist, um die Lagerschale wirksam abstützen zu können.

Im Betrieb des Pleuels an einer Brennkraftmaschine kann es jedoch vorkommen, dass bei einer ungünstigen Stellung der Kurbelwelle nur eine der beiden Nuten in dem Hublagerauge mit Hydraulikflüssigkeit versorgt wird. In dem erfindungsgemäßen Pleuel können dennoch beide Zylinder mit Hydraulikflüssigkeit versorgt werden, wenn die beiden Zuläufe eine Kreuzungsstelle aufweisen, so dass eine Fluidverbindung zwischen den beiden Zuläufen besteht. So können beide Zuläufe auch über eine Nut mit Hydraulikflüssigkeit versorgt werden. Alternativ ist auch möglich, eine weitere Verbindungsnut im Hublagerauge im Bereich des Pleueldeckels sowie zwei weitere Nuten in der Lagerschale an beiden Seiten des Pleuels vorzusehen, so dass eine Fluidverbindung von einer Nut im Hublagerauge im Bereich des Pleuelkörpers über eine seitliche Nut in der Lagerschale über die Verbindungsnut im Hublagerauge im Bereich des Pleueldeckels sowie über die zweite seitliche Nut in der Lagerschale zur zweiten Nut im Hublagerauge im Bereich des Pleuelkörpers besteht. Damit können beiden Nuten im Hublagerauge im Bereich des Pleuelkörpers und damit auch beide Zuläufe der beiden Zylinder mit Hydraulikflüssigkeit versorgt werden. In einer weiteren Alternative wäre auch möglich, dass die Lagerschale eine durchgehende Nut aufweist, welche eine hydraulische Verbindung der beiden Nuten des Hublagerauges im Bereich des Pleuelkörpers herstellt.

Eine günstige Ausgestaltung der Versorgungsbohrungen in der Kurbelwelle für die Hydraulikflüssigkeit kann günstig so vorgesehen sein, dass jeweils die Nut des Zulaufs, das gerade Hydraulikflüssigkeit benötigt, mit Hydraulikflüssigkeit versorgt wird oder gar so, dass stets beiden Nuten mit Hydraulikflüssigkeit versorgt werden.

Auf die beschriebene Weise ist vorteilhaft ein sicherer verschleißarmer Betrieb des Pleuels unter hoher Belastung der Lagerschale des Hublagerauges möglich bei gleichzeitig zuverlässiger Versorgung der Zylinder der Exzenter-Verstelleinrichtung mit Hydraulikflüssigkeit. Dadurch kann vorteilhaft ein Leckageausgleich an Hydraulikflüssigkeit in den Zylindern sowie ein Zurückführen oder Nachsaugen von Hydraulikflüssigkeit auf Grund unterschiedlicher Kammergrößen der Zylinder gewährleistet werden.

Gemäß einer vorteilhaften Ausgestaltung können wenigstens auf einem ersten Teil des inneren Umfangs des Hublagerauges im Bereich des Pleuelkörpers wenigstens zwei am Umfang des Hublagerauges voneinander beabstandete Nuten zur Versorgung der Zuläufe mit Hydraulikflüssigkeit vorgesehen sein. Beide Nuten können mit Hydraulikflüssigkeit versorgt werden, so dass Zuläufe zu den Zylindern, welche mit den Nuten hydraulisch verbunden sind, zuverlässig ein Zuführen oder Abführen von Hydraulikflüssigkeit zu oder aus den Zylindern ermöglichen. Die beiden Nuten können vorteilhaft so auf dem inneren Umfang des Hublagerauges voneinander beabstandet angeordnet sein, das jeweils der hochbelastete Teil des Hublagerauges ausgespart ist und so genügend Unterstützung für die Lagerschale leisten kann. Damit kann ein verschleißarmer Betrieb des Pleuels über die Lebensdauer günstig sichergestellt werden.

Gemäß einer vorteilhaften Ausgestaltung können die wenigstens zwei Nuten von einer mittleren Längsachse des Pleuelkörpers beabstandet angeordnet sein. Die zwei Nuten zur Versorgung der Zuläufe der Zylinder mit Hydraulikflüssigkeit können vorteilhaft so angeordnet sein, dass die Nuten beidseits des hochbeanspruchten Bereichs der Lagerschale um die Längsachse des Pleuels liegen, um die Lagerschale in diesem hochbeanspruchten Bereich durch den Pleuelkörper besser abzustützen. Die beiden Nuten können günstig außerhalb der Längsachse des hochbelasteten Bereichs der Lagerschale von der Längsachse wegführen. So wird vorteilhaft vermieden, dass das Hublagerauge durch die Anordnung der Nuten im gerade hochbelasteten Bereich der Lagerschale zu wenig Material aufweist, um die Lagerschale wirksam abstützen zu können.

Gemäß einer vorteilhaften Ausgestaltung kann jeder Zulauf jeweils mit jeder der beiden Nuten verbunden sein. Auf diese Weise kann sichergestellt werden, dass im Betrieb des Pleuels, wenn bei ungünstiger Lage der Kurbelwelle nur eine der beiden Nuten mit Hydraulikflüssigkeit versorgt wird, dennoch beide Zylinder über die Zuläufe mit Hydraulikflüssigkeit versorgt werden können, da die Zuläufe an beiden Nuten führen. Damit kann ein zuverlässiger Betrieb der Exzenter-Verstelleinrichtung in allen Betriebszuständen gewährleistet werden.

Gemäß einer vorteilhaften Ausgestaltung können die Zuläufe wenigstens eine Kreuzungsstelle im Pleuelkörper zwischen den Zylindern und den Nuten so aufweisen, dass zwischen den Zuläufen an der Kreuzungsstelle eine Fluidverbindung besteht. Eine Kreuzungsstelle der beiden Zuläufe erlaubt auf einfache Weise eine sichere Versorgung der beiden Zylinder mit Hydraulikflüssigkeit aus beiden Nuten, da so eine Fluidverbindung zu beiden Zylindern besteht und die Hydraulikflüssigkeit aus einer Nut auf beide Zylinder verteilt werden kann. Damit kann ein zuverlässiger Betrieb der Exzenter-Verstelleinrichtung in allen Betriebszuständen gewährleistet werden.

Gemäß einer vorteilhaften Ausgestaltung kann wenigstens auf einem zweiten Teil des inneren Umfangs des Hublagerauges im Bereich des Pleueldeckels wenigstens eine Verbindungsnut angeordnet sein, wobei die Verbindungsnut zur hydraulischen Verbindung der wenigstens zwei Nuten des Pleuelkörpers vorgesehen ist. Alternativ ist es möglich, eine weitere Verbindungsnut im Hublagerauge im Bereich des Pleueldeckels vorzusehen, so dass eine Fluidverbindung von einer Nut im Hublagerauge im Bereich des Pleuelkörpers über eine seitliche Nut in der Lagerschale über die Verbindungsnut im Hublagerauge im Bereich des Pleueldeckels sowie über die zweite seitliche Nut in der Lagerschale zur zweiten Nut im Hublagerauge im Bereich des Pleuelkörpers besteht. Damit können beiden Nuten im Hublagerauge im Bereich des Pleuelkörpers und damit auch beide Zuläufe der beiden Zylinder mit Hydraulikflüssigkeit versorgt werden.

Gemäß einer vorteilhaften Ausgestaltung kann in dem Hublagerauge eine Lagerschale angeordnet sein, wobei wenigstens auf einem Teil des inneren Umfangs der Lagerschale wenigstens eine, vorzugsweise zwei Nuten angeordnet sind, welche zur hydraulischen Verbindung der wenigstens zwei Nuten des Pleuelkörpers miteinander vorgesehen sind. Es ist auf diese Weise möglich, zwei weitere Nuten in der Lagerschale an beiden Seiten des Pleuels vorzusehen, so dass eine Fluidverbindung von einer Nut im Hublagerauge im Bereich des Pleuelkörpers über eine seitliche Nut in der Lagerschale über die Verbindungsnut im Hublagerauge im Bereich des Pleueldeckels sowie über die zweite seitliche Nut in der Lagerschale zur zweiten Nut im Hublagerauge im Bereich des Pleuelkörpers besteht. Damit können beiden Nuten im Hublagerauge im Bereich des Pleuelkörpers und damit auch beide Zuläufe der beiden Zylinder mit Hydraulikflüssigkeit versorgt werden.

Gemäß einer vorteilhaften Ausgestaltung kann ein Verstellweg der Exzenter-Verstelleinrichtung mittels eines Umschaltventils verstellbar sein. Eine Verdrehung der verstellbaren Exzenter-Verstelleinrichtung wird durch Einwirken von Massen- und Lastkräften der Brennkraftmaschine eingeleitet, die bei einem Arbeitstakt der Brennkraftmaschine auf die Exzenter-Verstelleinrichtung wirken. Während eines Arbeitstaktes verändern sich die Wirkungsrichtungen der auf die Exzenter-Verstelleinrichtung wirkenden Kräfte kontinuierlich. Die Drehbewegung oder Verstellbewegung wird durch die mit Hydraulikflüssigkeit, insbesondere mit Motoröl, beaufschlagten, im Pleuel integrierte Kolben unterstützt. Die Kolben verhindern ein Rückstellen der Exzenter-Verstelleinrichtung aufgrund variierender Kraftwirkungsrichtungen der auf die Exzenter-Verstelleinrichtung wirkenden Kräfte. Mit dem Umschaltventil kann so ein zuverlässige Verstellung der effektiven Pleuelstangenlänge über die Exzenter-Verstelleinrichtung erreicht werden, indem die Abläufe der beiden Zylinder in zwei Schaltstellungen jeweils über das Abgriffselement mit dem Hydraulikflüssigkeitskreislauf, beispielsweise dem Motorölkreislauf, verbunden werden.

Gemäß einer vorteilhaften Ausgestaltung kann das Umschaltventil zum Steuern des Hydraulikflüssigkeitsstroms vorgesehen sein, welches wahlweise in eine erste Schaltstellung oder eine zweite Schaltstellung verlagerbar ist, wobei in der ersten Schaltstellung der Ablauf des ersten Zylinders über das Hublagerauge des Pleuels mit dem Hydraulikflüssigkeitskreislauf und in der zweiten Schaltstellung der Ablauf des zweiten Zylinders über das Hublagerauge des Pleuels mit dem Hydraulikflüssigkeitskreislauf verbunden ist. Mit dem Umschaltventil kann so eine zuverlässige Verstellung der effektiven Pleuelstangenlänge über die Exzenter-Verstelleinrichtung erreicht werden, indem die Abläufe der beiden Zylinder in zwei Schaltstellungen jeweils über das Abgriffselement mit dem Hydraulikflüssigkeitskreislauf verbunden werden.

Gemäß einer vorteilhaften Ausgestaltung kann ein Ventilgehäuse des Umschaltventils an oder in dem Pleuelkörper oder Pleueldeckel angeordnet sein. Je nach Bauraumanforderungen an das Pleuel können verschiedene Anordnungen des Ventilgehäuses des Umschaltventils an oder im Pleuel vorteilhaft sein. Zur Verwendung des Pleuels mit Boxermotoren als Brennkraftmaschine kann das Umschaltventil beispielsweise bevorzugt im Pleuelkörper seitlich zwischen einem Zylinder und dem Hublagerauge vorgesehen werden. Alternativ ist es aus Bauraumgründen für den Einsatz des Pleuels in Reihenmotoren günstig, das Umschaltventil im Bereich des Pleueldeckels unterzubringen oder als Adapterlösung unterhalb des Pleueldeckels von außen an dem Pleueldeckel anzubringen.

Gemäß einer vorteilhaften Ausgestaltung kann das Ventilgehäuse als Adapter an dem Pleueldeckel vorgesehen sein. Es ist so möglich, das erfindungsgemäße Umschaltventil als anschraubbaren Adapter an dem Pleueldeckel vorzusehen, wie es aus Bauraumgründen bei Verwendung des Pleuels in einem Reihenmotor vorteilhaft ist. Ein weiterer Vorteil ist, dass das Umschaltventil so getrennt vor der Montage an einem Pleuel getestet werden kann. Bei Bedarf kann das Umschaltventil so auch leicht getauscht werden und durch ein anderes Umschaltventil ersetzt werden, das möglicherweise nicht mechanisch, sondern hydraulisch betätigbar sein kann.

Gemäß einer vorteilhaften Ausgestaltung können die Abläufe der Zylinder sich ausgehend von den Zylinderbohrungen durch den Pleuelkörper und den Pleueldeckel erstrecken und an einer dem Hublagerauge abgewandten Seite des Pleueldeckels in Ablaufleitungen des Umschaltventils münden. Die Abläufe können so durch den Pleuelkörper und bei montiertem Pleueldeckel durch den Pleueldeckel weitergeführt werden, um an der der Unterseite des Pleueldeckels wieder auszutreten. Auf diese Weise können die Abläufe in das als Adapter an der Unterseite des Pleueldeckels angeordnete Umschaltventil münden. Damit kann die Versorgung der Zylinder mit Hydraulikflüssigkeit auf günstige Weise sichergestellt werden. Über die Steuerung des Abführens von Hydraulikflüssigkeit aus den Zylindern kann die Exzenter-Verstelleinrichtung mit Hilfe des Umschaltventils wirksam gesteuert werden.

Gemäß einer vorteilhaften Ausgestaltung kann wenigstens eine Leitung im Pleueldeckel zur Verbindung des Umschaltventils mit der Verbindungsnut des Hublagerauges angeordnet sein. Durch die Verbindung des Umschaltventils über die Verbindungsnut des Hublagerauges mit dem Hydraulikflüssigkeitskreislauf ist der Betrieb der Exzenter-Verstelleinrichtung über das Umschaltventil sicher gewährleistet. Das Abführen von Hydraulikflüssigkeit über die Verbindungsnut des Hublagerauges stellt eine einfache, kostengünstige und zuverlässige Art dar, die Fluidverbindung zwischen Umschaltventil und Hydraulikflüssigkeitskreislauf sicherzustellen.

Gemäß einer vorteilhaften Ausgestaltung kann ein Abgriffselement des Umschaltventils zum Steuern des Hydraulikflüssigkeitsstroms in dem Umschaltventil vorgesehen sein, welches mittels eines federbeaufschlagten Rastelementes in den beiden Schaltstellungen arretierbar ist. Über das Abgriffselement kann in der ersten Schaltstellung der Ablauf des ersten Zylinders mit dem Hydraulikflüssigkeitskreislauf und in der zweiten Schaltstellung der Ablauf des zweiten Zylinders mit dem Hydraulikflüssigkeitskreislauf verbunden sein. Mit dem Umschaltventil kann so ein zuverlässige Verstellung der effektiven Pleuelstangenlänge über die Exzenter-Verstelleinrichtung erreicht werden, indem die Abläufe der beiden Zylinder in den beiden Schaltstellungen jeweils über das Abgriffselement mit dem Hydraulikflüssigkeitskreislauf, beispielsweise dem Motorölkreislauf, verbunden werden. Die Arretierung des Abgriffselements in den beiden Schaltstellungen über das federbeaufschlagte Rastelement stellt eine sehr einfache und kostengünstige Art dar, die Funktion des Umschaltventils sicherzustellen. So kann als Rastelement beispielsweise eine mit einer Druckfeder beaufschlagte Kugel zum Einsatz kommen, welche in zwei Raststellungen des Ventilgehäuses einrasten kann.

Gemäß einer vorteilhaften Ausgestaltung kann eine Feder des Rastelementes nach bestimmungsgemäßer Montage des Ventilgehäuses an dem Pleueldeckel wenigstens teilweise in einer Ausnehmung des Pleueldeckels geführt vorgesehen sein. Die Anordnung zumindest eines Teils der Feder des Rastelements in dem Pleueldeckel stellt eine günstig bauraumoptimierte Lösung der Anordnung des Ventilgehäuses an dem Pleueldeckel dar. Das Ventilgehäuse kann auf diese Weise flacher ausgeführt sein, da die Feder in der Ausnehmung des Pleueldeckels versenkt werden kann.

### Kurze Beschreibung der Zeichnungen

Weitere Vorteile ergeben sich aus der folgenden Zeichnungsbeschreibung. In den Zeichnungen sind Ausführungsbeispiele der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**
- Fig. 1: eine isometrische Ansicht eines Pleuels nach einem Ausführungsbeispiel der Erfindung;
- Fig. 2: das Pleuel aus Fig. 1 in einem Längsschnitt;
- Fig. 3: das Pleuel aus Fig. 1 in einem weiteren Längsschnitt;
- Fig. 4: das Pleuel aus Fig. 1 in einem weiteren Längsschnitt;
- Fig. 5: eine isometrische Ansicht eines Pleuels nach einem weiteren Ausführungsbeispiel der Erfindung;
- Fig. 6: das Pleuel aus Fig. 5 in einem Längsschnitt;
- Fig. 7: das Pleuel aus Fig. 5 in einem weiteren Längsschnitt; und
- Fig. 8: das Pleuel aus Fig. 5 in einem weiteren Längsschnitt.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

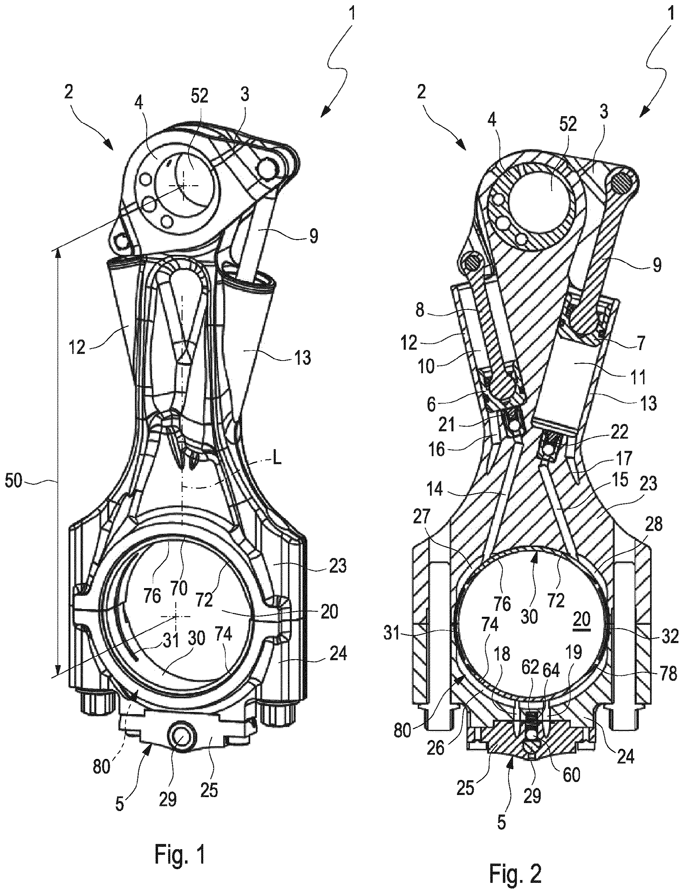

Die Figur 1 bis 4 zeigen verschiedene Ansichten und Schnitte eines ersten Ausführungsbeispiels eines erfindungsgemäßen Pleuels 1 für eine Brennkraftmaschine mit variabler Verdichtung. Figur 1 zeigt eine isometrische Ansicht, während die Figuren 2 bis 4 Längsschnitte in verschiedener Tiefe des Pleuels 1 darstellen.

Das Pleuel 1 umfasst einen Pleuelkörper 23 und einen daran angeordneten Pleueldeckel 24, wodurch ein Hublagerauge 20 eingeschlossen ist. Das Pleuel 1 weist eine Exzenter-Verstelleinrichtung 2 zur Verstellung einer effektiven Pleuelstangenlänge 50 mit einem Exzenter 4 auf, welcher mit einem ein- oder mehrteiligen Exzenterhebel 3 zusammenwirkt. Dabei ist ein Verstellweg der Exzenter-Verstelleinrichtung 2 mittels eines Umschaltventils 5 verstellbar. Die effektive Pleuelstangenlänge 50 ergibt sich als Abstand einer Mittelachse des Hublagerauges 20 von einer Mittelachse einer Bohrung des Exzenters 4 als Pleuellagerauge 52.

Die Exzenter-Verstelleinrichtung 2 weist wenigstens zwei Zylinder 12, 13 mit jeweils einem Kolben 6, 7 auf, der in einer Zylinderbohrung 10, 11 verschiebbar geführt und mit einer Stützstange 8, 9 verbunden ist. Ein Zulauf 14, 15 ist jeweils zum Zuführen von Hydraulikflüssigkeit in den Zylinder 12, 13 sowie ein Ablauf 16, 17 zum Abführen von Hydraulikflüssigkeit von dem Zylinder 12, 13 vorgesehen.

Eine Verdrehung der verstellbaren Exzenter-Verstelleinrichtung 2 wird durch Einwirken von Massen- und Lastkräften des Verbrennungsmotors initiiert, die bei einem Arbeitstakt des Verbrennungsmotors auf die Exzenter-Verstelleinrichtung 2 wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen oder mehrere mit Hydraulikflüssigkeit, insbesondere mit Motoröl, beaufschlagte, im Pleuel 1 integrierte Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte. Die Kolben 6, 7 sind mittels Stützstangen 8, 9 mit dem Exzenterhebel 3 wirkverbunden.

Wie Figur 2 zu entnehmen ist, welche einen Schnitt des Pleuels 1 zeigt, sind die Kolben 6, 7 jeweils in der Zylinderbohrung 10, 11 eines Zylinders 12, 13 verschiebbar geführt. Die Zylinder 12, 13 können als separates Bauteil oder einteilig mit einem Pleuelkörper des Pleuels 1 vorgesehen sein. Ebenso ist es grundsätzlich denkbar, das Pleuel 1 mit nur einem Zylinder vorzusehen und einen doppeltwirkenden Kolben einzusetzen.

Die Kolben 6, 7 sind in durch die Zylinderbohrungen 10, 11 gebildeten Hydraulikkammern verschiebbar angeordnet und über die Zuläufe 14, 15 von dem Hublagerauge 20 aus mit Hydraulikflüssigkeit (Öl) über Rückschlagventile 21, 22 beaufschlagt. Diese verhindern dabei ein Rückfließen der Hydraulikflüssigkeit aus den Hydraulikkammern zurück in die Hydraulikflüssigkeitsleitungen in eine mehrteilige Lagerschale 30 des Hublagerauges 20 und ermöglichen ein Nachsaugen von Hydraulikflüssigkeit in die Hydraulikkammern.

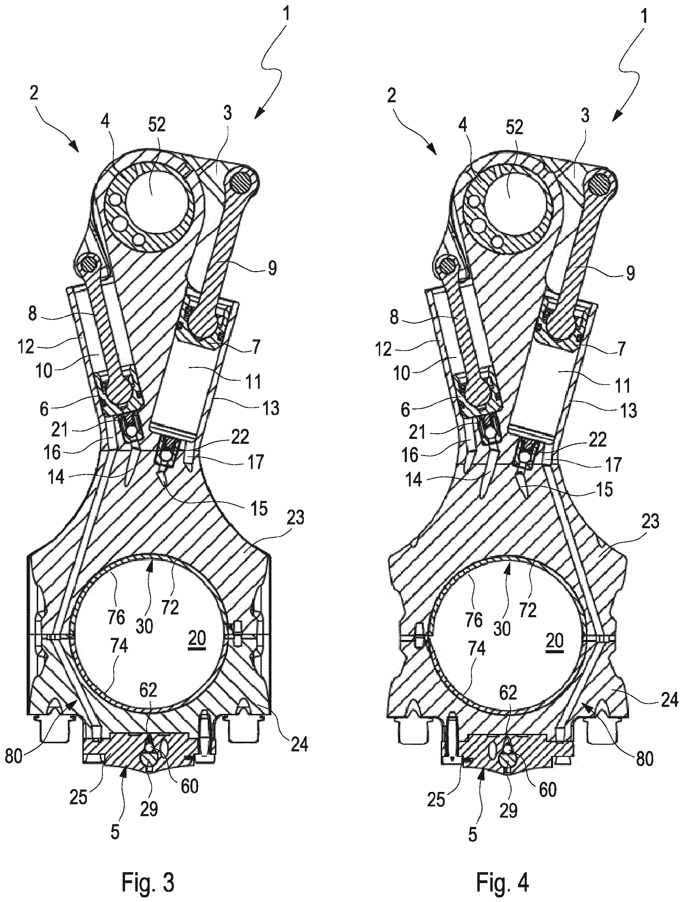

Die Hydraulikkammern sind weiter über in den Figuren 3 und 4 erkennbare Abläufe 16, 17 mit dem Umschaltventil 5 verbunden. Diese Abläufe 16, 17 verlaufen durch einen Pleuelkörper 23 sowie einen daran befestigten Pleueldeckel 24 in Richtung Unterseite des Pleuels 1, an welcher ein Ventilgehäuse 25 des Umschaltventils 5 als Adapter befestigt ist, und münden in Ablaufleitungen des Umschaltventils 5. Das Umschaltventil 5 kann jedoch auch in den Pleueldeckel 24 oder in den Pleuelkörper 23 integriert vorgesehen sein.

Wenigstens eine Leitung verbindet das Umschaltventil 5 mit einer Verbindungsnut 26 des Hublagerauges 20 im Bereich des Pleueldeckels 24. Die Verbindungsnut 26 ist auf einem zweiten Teil 74 des inneren Umfangs 70 des Hublagerauges 20 im Bereich des Pleueldeckels 24 angeordnet ist.

Wie Figur 2 zu entnehmen ist, sind im gezeigten Ausführungsbeispiel zwei Leitungen 18, 19 zur Verbindung des Umschaltventils 5 mit der Verbindungsnut 26 und damit dem Hydraulikflüssigkeitskreislauf 80 der Brennkraftmaschine vorgesehen. Dagegen weist der Pleuelkörper 23 im Bereich des Hublagerauges 20 zwei Nuten 27, 28 auf, welche die Zuläufe 14, 15 mit dem Hydraulikflüssigkeitskreislauf 80 verbinden und das erwähnte Nachsaugen in Richtung Hydraulikkammern ermöglichen. Die zwei Nuten 27, 28 sind zur Versorgung der Zuläufe 14, 15 mit Hydraulikflüssigkeit auf einem ersten Teil 72 des inneren Umfangs 70 des Hublagerauges 20 im Bereich des Pleuelkörpers 23 am Umfang 70 des Hublagerauges 20 voneinander beabstandet vorgesehen.

Erfindungsgemäß ist dabei ein hochbelasteter Bereich des Hublagerauges 20 ausgespart. Die zwei Nuten 27, 28 sind dabei von einer mittleren Längsachse L des Pleuelkörpers 23 beabstandet angeordnet. Die Nuten 27, 28 sind so in einem weniger stark belasteten Bereich angeordnet, so dass der hochbelastete Bereich des Hublagerauges 20 nicht mehr durch eine Nut geschwächt wird und als tragende Fläche für die Lagerschale 30 zur Verfügung steht. Hierdurch kann die Lagerschale 30 schmäler ausgebildet werden.

Die Zuläufe 14, 15 sind jeweils mit einer Nut 27, 28 verbunden und kreuzen sich im Pleuelkörper 23 nicht. Es besteht allerdings über die Lagerschale 30 (beispielsweise über die Nuten 31, 32) und die Verbindungsnut 26 im Pleueldeckel 24 eine Verbindung der Nuten 26, 27, 28, so dass beide Zuläufe 14, 15 permanent mit Hydraulikflüssigkeit versorgt werden können. Die Verbindungsnut 26 ist damit auch zur hydraulischen Verbindung der wenigstens zwei Nuten 27, 28 des Pleuelkörpers 23 vorgesehen. Dafür sind wenigstens auf einem Teil 78 des inneren Umfangs 76 der Lagerschale 30 wenigstens eine, vorzugsweise zwei Nuten 31, 32 angeordnet, welche zur hydraulischen Verbindung der wenigstens zwei Nuten 27, 28 des Pleuelkörpers 23 miteinander vorgesehen sind.

Wie in Figur 2 dargestellt, sind wenigstens auf einem ersten Teil 72 des inneren Umfangs 70 des Hublagerauges 20 im Bereich des Pleuelkörpers 23 wenigstens zwei am Umfang 70 des Hublagerauges 20 voneinander beabstandete Nuten 27, 28 zur Versorgung der Zuläufe 14, 15 mit Hydraulikflüssigkeit vorgesehen. Um die Hydraulikflüssigkeitsversorgung der Zuläufe 14, 15 trotz der relativ langen Versorgungswege zu verbessern, können Hydraulikflüssigkeitsversorgungsbohrungen in der Kurbelwelle so gewählt werden, dass immer die Nut 27, 28, deren zugeordneter Zulauf 14, 15 gerade Hydraulikflüssigkeit benötigt, mit Hydraulikflüssigkeit versorgt wird. Alternativ können die Hydraulikflüssigkeitsversorgungsbohrungen der Kurbelwelle derart ausgestaltet werden, dass permanent beide Nuten 27, 28 versorgt werden.

Das erfindungsgemäße Umschaltventil 5, das zum Steuern des Hydraulikflüssigkeitsstroms vorgesehen ist, ist wahlweise in eine erste Schaltstellung oder eine zweite Schaltstellung verlagerbar, wobei in der ersten Schaltstellung der Ablauf 16 des ersten Zylinders 12 über das Hublagerauge 20 des Pleuels 1 mit dem Hydraulikflüssigkeitskreislauf 80 und in der zweiten Schaltstellung der Ablauf 17 des zweiten Zylinders 13 über das Hublagerauge 20 des Pleuels mit dem Hydraulikflüssigkeitskreislauf 80 verbunden ist. Das Umschaltventil 5 weist ein Abgriffselement 29 auf, welches in dem Ventilgehäuse 25 angeordnet und wahlweise in eine erste Schaltstellung oder eine zweite Schaltstellung verlagerbar ist, wobei über das Abgriffselement 29 in der ersten Schaltstellung der Ablauf 16 des ersten Zylinders 12 mit einem Ölkreislauf und in der zweiten Schaltstellung der Ablauf 17 des zweiten Zylinders 13 mit dem Ölkreislauf verbunden ist. Das Abgriffselement 29, das zum Steuern des Hydraulikflüssigkeitsstroms in dem Umschaltventil 5 vorgesehen ist, ist mittels eines federbeaufschlagten Rastelementes 60 in den beiden Schaltstellungen arretierbar.

Das Ventilgehäuse 25 des Umschaltventils 5 kann an oder in dem Pleuelkörper 23 oder Pleueldeckel 24 angeordnet sein. Bei den beiden gezeigten Ausführungsbeispielen ist das Ventilgehäuse 25 aus Bauraumgründen als Adapter an der Unterseite des Pleueldeckels 24 angeordnet. Die Abläufe 16, 17 erstrecken sich ausgehend von den Zylinderbohrungen 10, 11 durch den Pleuelkörper 23 und den Pleueldeckel 24 und münden an der dem Hublagerauge 20 abgewandten Seite des Pleueldeckels 24 in Ablaufleitungen des Umschaltventils 5. Die Feder 62 des Rastelementes 60 wird nach bestimmungsgemäßer Montage des Ventilgehäuses 25 an dem Pleueldeckel 24 wenigstens teilweise in einer Ausnehmung 64 des Pleueldeckels 24 geführt. Dadurch kann das Ventilgehäuse 25 flacher ausgeführt sein.

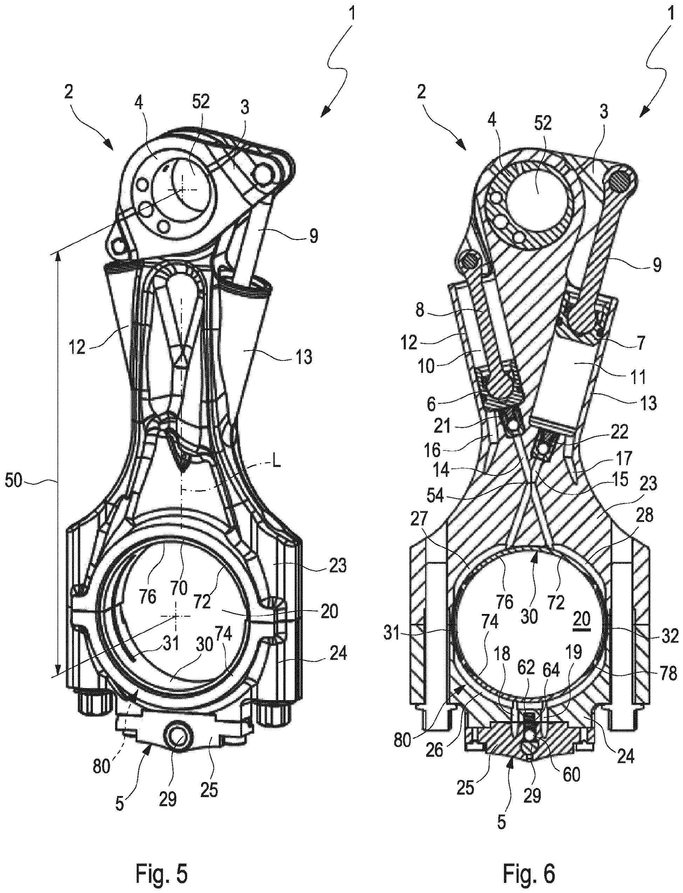

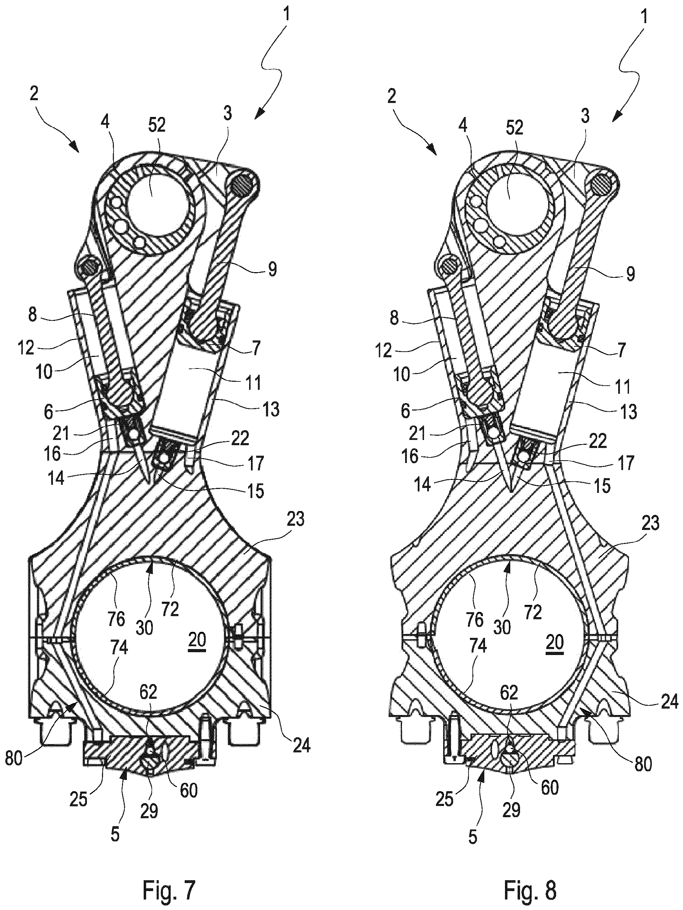

Den Figuren 5 bis 8 ist ein zweites Ausführungsbeispiel eines erfindungsgemäßen Pleuels 1 zu entnehmen. Figur 5 zeigt eine isometrische Ansicht, während die Figuren 6 bis 8 Längsschnitte in verschiedener Tiefe des Pleuels 1 darstellen.

Dieses unterscheidet sich zum ersten Ausführungsbeispiel lediglich darin, dass sich die Zuläufe 14, 15 im Pleuelkörper 23 kreuzen. Die Zuläufe 14, 15 weisen wenigstens eine Kreuzungsstelle 54 im Pleuelkörper 23 zwischen den Zylindern 6, 7 und den Nuten 27, 28 so auf, dass zwischen den Zuläufen 6, 7 an der Kreuzungsstelle 54 eine Fluidverbindung besteht. Dadurch sind die Zuläufe 14, 15 jeweils mit beiden Nuten 27, 28 verbunden. Dadurch kann die Versorgung der beiden Zylinder 6, 7 mit Hydraulikflüssigkeit über die Zuläufe 14, 15 auch bei ungünstigen Umständen, bei denen nur eine Nut 27, 28 des Hublagerauges 20 aus dem Hydraulikflüssigkeitskreislauf 80 versorgt wird, sichergestellt werden. Die Hydraulikflüssigkeitsbohrungsnuten in der Kurbelwelle können damit weniger aufwendig ausgestaltet werden.

## Patentansprüche

1. Pleuel (1) für eine Brennkraftmaschine mit variabler Verdichtung mit einer Exzenter-Verstelleinrichtung (2) zur Verstellung einer effektiven Pleuelstangenlänge (50), umfassend einen Pleuelkörper (23) und einen daran angeordneten Pleueldeckel (24), wodurch ein Hublagerauge (20) eingeschlossen ist,
wobei die Exzenter-Verstelleinrichtung (2) wenigstens einen, vorzugsweise zwei, Zylinder (12, 13) mit einem oder jeweils einem Kolben (6, 7) aufweist, der in einer Zylinderbohrung (10, 11) verschiebbar geführt und mit einer Stützstange (8, 9) verbunden ist, und wobei ein Zulauf (14, 15) zum Zuführen von Hydraulikflüssigkeit in den oder die Zylinder (12, 13) sowie ein Ablauf (16, 17) zum Abführen von Hydraulikflüssigkeit von dem oder den Zylindern (12, 13) vorgesehen sind,
**dadurch gekennzeichnet, dass** der Pleuelkörper (23) zwei Nuten (27, 28) zur Verbindung der Zuläufe (14, 15) mit einem Hydraulikflüssigkeitskreislauf (80) aufweist, welche derart angeordnet sind, dass ein hochbelasteter Bereich des Hublagerauges (20) ausgespart ist.

2. Pleuel nach Anspruch 1, **dadurch gekennzeichnet, dass** wenigstens auf einem ersten Teil (72) des inneren Umfangs (70) des Hublagerauges (20) im Bereich des Pleuelkörpers (23) wenigstens zwei am Umfang (70) des Hublagerauges (20) voneinander beabstandete Nuten (27, 28) zur Versorgung der Zuläufe (14, 15) mit Hydraulikflüssigkeit vorgesehen sind.

3. Pleuel nach Anspruch 1 oder 2, **dadurch gekennzeichnet, dass** die wenigstens zwei Nuten (27, 28) von einer mittleren Längsachse (L) des Pleuelkörpers (23) beabstandet angeordnet sind.

4. Pleuel nach einem der vorhergehenden Ansprüche, **dadurch gekennzeichnet, dass** jeder Zulauf (14, 15) jeweils mit jeder der beiden Nuten (27, 28) verbunden ist.

5. Pleuel nach einem der vorhergehenden Ansprüche, **dadurch gekennzeichnet, dass** die Zuläufe (14, 15) wenigstens eine Kreuzungsstelle (54) im Pleuelkörper (23) zwischen den Zylindern (12, 13) und den Nuten (27, 28) so aufweisen, dass zwischen den Zuläufen (14, 15) an der Kreuzungsstelle (54) eine Fluidverbindung besteht.

6. Pleuel nach einem der vorhergehenden Ansprüche, **dadurch gekennzeichnet, dass** wenigstens auf einem zweiten Teil (74) des inneren Umfangs (70) des Hublagerauges (20) im Bereich des Pleueldeckels (24) wenigstens eine Verbindungsnut (26) angeordnet ist, wobei die Verbindungsnut (26) zur hydraulischen Verbindung der wenigstens zwei Nuten (27, 28) des Pleuelkörpers (23) vorgesehen ist.

7. Pleuel nach einem der vorhergehenden Ansprüche, **dadurch gekennzeichnet, dass** in dem Hublagerauge (20) eine Lagerschale (30) angeordnet ist, wobei wenigstens auf einem Teil (78) des inneren Umfangs (76) der Lagerschale (30) wenigstens eine, vorzugsweise zwei Nuten (31, 32) angeordnet sind, welche zur hydraulischen Verbindung der wenigstens zwei Nuten (27, 28) des Pleuelkörpers (23) miteinander vorgesehen sind.

8. Pleuel nach einem der vorhergehenden Ansprüche, **dadurch gekennzeichnet, dass** ein Verstellweg der Exzenter-Verstelleinrichtung (2) mittels eines Umschaltventils (5) verstellbar ist.

9. Pleuel nach Anspruch 8, **dadurch gekennzeichnet, dass** das Umschaltventil (5) zum Steuern eines Hydraulikflüssigkeitsstroms vorgesehen ist, welches wahlweise in eine erste Schaltstellung oder eine zweite Schaltstellung verlagerbar ist, wobei in der ersten Schaltstellung der Ablauf (16) des ersten Zylinders (12) über ein Hublagerauge (20) des Pleuels mit einem Hydraulikflüssigkeitskreislauf (80) und in der zweiten Schaltstellung der Ablauf (17) des zweiten Zylinders (13) über das Hublagerauge (20) des Pleuels mit dem Hydraulikflüssigkeitskreislauf (80) verbunden ist.

10. Pleuel nach Anspruch 8 oder 9, **dadurch gekennzeichnet, dass** ein Ventilgehäuse (25) des Umschaltventils (5) an oder in dem Pleuelkörper (23) oder Pleueldeckel (24) angeordnet ist.

11. Pleuel nach einem der Ansprüche 8 bis 10, **dadurch gekennzeichnet, dass** das Ventilgehäuse (25) als Adapter an dem Pleueldeckel (24) vorgesehen ist.

12. Pleuel nach einem der Ansprüche 8 bis 11, **dadurch gekennzeichnet, dass** die Abläufe (16, 17) sich ausgehend von den Zylinderbohrungen (10, 11) durch den Pleuelkörper (23) und den Pleueldeckel (24) erstrecken und an einer dem Hublagerauge (20) abgewandten Seite des Pleueldeckels (24) in Ablaufleitungen des Umschaltventils (5) münden.

13. Pleuel nach einem der Ansprüche 8 bis 12, **dadurch gekennzeichnet, dass** wenigstens eine Leitung (18, 19) im Pleueldeckel (24) zur Verbindung des Umschaltventils (5) mit der Verbindungsnut (26) des Hublagerauges (20) angeordnet ist.

14. Pleuel nach einem der Ansprüche 8 bis 13, **dadurch gekennzeichnet, dass** ein Abgriffselement (29) des Umschaltventils (5) zum Steuern des Hydraulikflüssigkeitsstroms in dem Umschaltventil (5) vorgesehen ist, welches mittels eines federbeaufschlagten Rastelementes (60) in den beiden Schaltstellungen arretierbar ist.

15. Pleuel nach Anspruch 14, **dadurch gekennzeichnet, dass** eine Feder (62) des Rastelementes (60) nach bestimmungsgemäßer Montage des Ventilgehäuses (25) an dem Pleueldeckel (24) wenigstens teilweise in einer Ausnehmung (64) des Pleueldeckels (24) geführt vorgesehen ist.
